# EUROPÄISCHE PATENTSCHRIFT

(11) **EP 3 580 107 B1**
(45) Veröffentlichungstag und Bekanntmachung des Hinweises auf die Patenterteilung: **26.05.2021**
(21) Anmeldenummer: 18704506.7
(22) Anmeldetag: 06.02.2018
(51) Int. Cl.: B61D 15/06, B61D 17/04, B61G 7/10, B61D 17/06, B61G 9/04

(54) **CRASH-SYSTEM FÜR SCHIENENFAHRZEUG**
CRASH SYSTEM FOR A RAIL VEHICLE
SYSTÈME DE PROTECTION EN CAS DE COLLISION POUR VÉHICULE FERROVIAIRE

(30) Priorität: 09.02.2017 DE 102017102568
(43) Veröffentlichungstag der Anmeldung: 18.12.2019
(73) Patentinhaber: CRRC Qingdao Sifang Co., Ltd., Qingdao City, Shandong 266111 (CN); CG Rail - Chinesisch-Deutsches Forschungs - Und Entwicklungszentrum Für Bahn - Und Verkehrstechnik Dresden GmbH, 01067 Dresden (DE)
(72) Erfinder: DING, Sansan, Qingdao Shandong 266111 (CN); TIAN, Honglei, Qingdao, Shandong 266111 (CN); LIN, Peng, Qingdao Shandong 266111 (CN); CAI, Junshuang, Qingdao Shandong 266111 (CN); XU, Qing, Qingdao, Shandong 266111 (CN); TENG, Letian, Qingdao, Shandong 266111 (CN); ZHONG, Chongcheng, Qingdao, Shandong 266111 (CN); RUAN, Dawei, Qingdao, Shandong 266111 (CN); HUFENBACH, Werner, 01324 Dresden (DE); ULBRICHT, Andreas, 01324 Dresden (DE)
(74) Vertreter: Prinz & Partner mbB
(86) Internationale Anmeldenummer: PCT/EP2018/052919
(87) Internationale Veröffentlichungsnummer: WO 2018/146082

(56) Entgegenhaltungen:
- WO-A1-2009/040309
- DE-T2- 69 818 357
- FR-A1- 2 698 840
- US-A1- 2015 033 978

## Beschreibung

Gegenstand der vorliegenden Erfindung ist eine Konstruktion für die Durchleitung von Stoßenergie im Crash-Falle für ein Kopfmodul von Schienenfahrzeugen. Das erfindungsgemäße Crash-System ist geeignet, im Crash-Fall die auftretenden Lasten abzubauen und an das hinter dem Kopfmodul nachfolgende Wagenteil weiterzuleiten.

Insbesondere handelt es sich um ein Kopfmodul für Nahverkehrszüge, insbesondere U-Bahnen. Bei derartigen Zügen ist das Kopfmodul häufig in den Wagen integriert. Das Kopfmodul wird im Weiteren auch als Kabine bezeichnet.

Im Interesse der Material- und Energieeffizienz hat sich in den letzten Jahren der Einsatz leichter Materialien und der Prinzipien des Leichtbaus im Schienenfahrzeugbau immer weiter durchgesetzt. Insbesondere die Verwendung von Faserverbundmaterialien nimmt immer mehr zu. Auch für die Gestaltung der Kopfmodule von Schienenfahrzeugen trifft dies zu.

Bekannte Konstruktionen sehen hier vor, vorgefertigte Module auf die Unterkonstruktion, die den gesamten Wagen ohne Unterbrechung durchzieht, aufzusetzen.

So ist Gegenstand der DE 197 25 905 ein Verbindungsverfahren eines vorgefertigten Kopfmoduls aus faserverstärktem Kunststoff (FKV) mit dem Untergestell und dem Wagenkastenmodul. Die Seitenwände des Kopfmoduls sind vorzugsweise als Sandwichsstruktur aus FKV mit einem zwischenliegenden Kernmaterial gefertigt Zum Einsatz kommen hier spezielle Verstärkungsprofile in den Fügebereichen des Kopfmoduls, die die Kraftübertragung zwischen Untergestell bzw. Wagenmodul und den FKV-Wänden des Kopfmoduls verbessern. Eine spezielle Gestaltung der Faserführung der FKV-Verstärkung ist nicht vorgesehen. Die Verstärkungsprofile sind in den Kern der FKV-Wände des Kopfmoduls integriert und wirken als Widerlager für die Bolzenverbindung zwischen FKV-Wänden des Kopfmoduls und Untergestell bzw. Wagenkastenmodul. Nachteilig ist hierbei, dass die Verstärkungsfasermaterialen zwischen dem Verstärkungsprofil und dem Untergestell einer Druckbelastung ausgesetzt ist und so die Gefahr einer kriechbedingten Schädigung des FKV-Materials in diesem Bereich besteht.

In der DE 10 2014 204 761 A1 wird das Problem der Crashsicherheit, insbesondere der Frontscheibe, bei den Schienenfahrzeugköpfen behandelt. Es ist vorgesehen, dass der Rahmen der Frontscheibe ein Verformungselement aufweist, das Energie aufnehmen und durch seine Verformung abbauen kann. Dabei soll sich die Frontscheibe möglichst ohne Entstehung von Bruchstücken aus dem Rahmen bewegen. Realisiert wird dies in der DE 10 2014 204 761 A1 indem Sollbruchstellen im Rahmen der Frontscheibe oder in dessen Nähe vorgesehen sind. Die Sollbruchstellen werden durch die geometrische Ausführung, die Dimensionierung des Verformungselementes oder dessen Material erzeugt. Das Verformungselement soll in einer Ausführungsform teilweise oder vollständig um die Frontscheibe herum verlaufen. Der Rahmen kann auch von der Fahrzeughülle selbst gebildet werden.

Gegenstand der WO 2015/011193 A1 ist eine Energieverzehrvorrichtung für Schienenfahrzeuge. Zweck dieser Vorrichtung ist es, im Crash-Falle einen Teil der Stoßenergie aufzunehmen und in Materialverformung umzuwandeln. Dazu wird ein dreidimensional geformter Körper aus FKV genutzt. Dieser weist Schichten mit unidirektional ausgerichteten Fasern und Schichten mit ungerichtet (Wirrfasern) angeordneten Fasern auf. Der Energieverzehr wird insbesondere dadurch realisiert, dass ein Gegenelement in Längsrichtung auf das Energieverzehrelement trifft und dabei die Lage bzw. die Lagen mit Wirrfasern zerstört, insbesondere zerfasert. Die Anordnung der Fasern ohne Vorzugsrichtung gewährleistet dabei, dass die Stoßenergie beim Bruch der Fasern umgesetzt wird und nicht zu einer Delaminierung verschiedener Faserschichten führt.

In der WO 2010/029188 A1 wird ein selbstragender Fahrzeugkopf offenbart, der vorrangig aus Faserverbundmaterial aufgebaut ist. Der Fahrzeugkopf weist Strukturelemente auf, die dem Energieverzehr im Crashfalle dienen sowie sonstige Strukturelemente, die keine spezielle Funktion zum Energieabbau haben. Insbesondere sollen auch die energieverzehrenden Strukturelemente aus Faserverbundwerkstoff bestehen. Weiterhin ist vorgesehen, dass eine Reihe von energieabbauenden Strukturelementen nacheinander zum Energieverzehr beiträgt bzw. entsprechende Kräfte überträgt. Der Fahrzeugkopf weist eine Mittelpufferkupplung auf, die bauartbedingt vor der Front der Verkleidung des Fahrzeugkopfes liegt. Daher ist der Mittelpufferkupplung unmittelbar ein Energieverzehrelement nachgeordnet, das auf die Kupplung ausgeübte Stöße absorbieren soll. Die Mittelpufferkupplung selbst ist an einem rahmenartigen Gestell angeordnet, das die Zug- bzw. Druckkräfte des Normalbetriebs auf die gesamte Breite des nachgeordneten Wagenteils verteilt. Neben dem Energieverzehrelement sind parallel dazu zwei weitere seitliche Energieverzehrelemente angeordnet, die als Aufkletterschutz wirken sollen. Des Weiteren weist die Brüstung unterhalb des Frontfensters mindestens ein, bevorzugt zwei Energieverzehrelemente auf. Von der Brüstung führen auf jeder Seite des Kopfteils zwei Stränge zur Energieübertragung in die Unterkonstruktion des Wagenteils. Darüber hinaus sind den beiden A-Säulen in Bewegungsrichtung zwei Energieverzehrelemente vorgelagert. Die A-Säulen sind dazu ausgestaltet, Bewegungsenergie in die Dachstruktur zu leiten und eventuell noch verbliebene Stoßenergie im Crash-Fall kontrolliert abzubauen. Dies ist notwendig, da konventionelle Wagenteilkonstruktionen keine im Dachbereich angeordneten Längsträger aufweisen, die Teile der Stoßenergie aufnehmen könnten. Nachteilig ist hierbei, dass eine auf die Brüstung ausgeübte Kraft in Verbindung mit den zwei seitlichen Strängen zur Energieübertragung zu einer Hebelwirkung auf die Dachkonstruktion führen kann, die diese in eine Bewegung, im Wesentlichen senkrecht zur Bewegungsrichtung des Fahrzeugs, versetzt. Dies kann die Fähigkeit der Dachkonstruktion, verbliebene Stoßenergie aufzunehmen, zumindest reduzieren. Es liegt somit eine nachteilige Kopplung von Sicherheitssystemen vor.

Die DE 60 2004 009 942 T2 behandelt ein Aufprallenergie-Absorptionssystem für eine Stadtbahn. Das beschriebene Crashsystem umfasst fünf verschiedene Zonen, die für unterschiedliche Zusammenprall-Szenarien ausgebildet sind. Die ersten drei Zonen sollen Lastspitzen aufnehmen, die letzten beiden das Eindringen in den oder das Zusammendrücken des Fahrgastbereichs verhindern.

Die DE 60 2005 004 131 T1 beschreibt einen Rahmen für einen Fahrzeugkopf, in den mehrere nachgiebige Regionen verteilt sind. Der Rahmen ist so ausgelegt, dass in den nachgiebigen Regionen ein möglichst umfassender Energieverzehr stattfindet.

Aus der DE 698 18 357 T2 ist ein Kopfmodul für ein Schienenfahrzeug bekannt, das ohne zusätzliches Untergestell an der Stirnfläche eines nachfolgenden Wagenteils lösbar befestigt werden kann, wobei das Kopfmodul ein Crash-System aufweist.

Die US 2015/033978 A1 zeigt ein Crash-System für ein Kopfmodul, bei dem ein Crash-Durchleitungselement vorgesehen ist.

Aus der FR 2 698 840 A1 zeigt ein Crash-System für ein Kopfmodul, bei dem eine Komponente einen nach unten geöffneten U-förmigen Querschnitt aufweist.

Die WO 2009/040309 A1 zeigt ein Crash-System für ein Kopfmodul, bei dem eine Platte vorgesehen ist.

Die genannten Lösungen sind für Züge geeignet, die einer Vielzahl unterschiedlicher Kollisionsgegner ausgesetzt sein können. Dementsprechend komplex sind die angewandten Lösungen. Es stellt sich im Bereich der Mittelpufferkupplung die Aufgabe, eine Lösung vorzuschlagen, die einen einfachen konstruktiven Aufbau aufweist und geeignet ist, sowohl die Zug- und Druckkräfte des Normalbetriebs zuverlässig auf das nachfolgende Wagenteil zu übertragen, als auch die Stoßkräfte im Crash-Falle weitestgehend abzubauen und eventuell verbliebene Energie in das nachfolgende Wagenteil abzuleiten.

Unter Normalbetrieb werden die im täglichen bestimmungsgemäßen Betrieb auftretenden Kräfte, insbesondere die aus Beschleunigung des Zuges, dem Abbremsen, dem Rangieren und während der Kuppelvorgänge auftretenden Belastungen verstanden. Als Crash-Fall wird der unbeabsichtigte Zusammenstoß mit einem gleichartigen Kopfmodul eines anderen Zuges bezeichnet.

Die Aufgabe soll für einen Fahrzeugkopf gelöst werden, dem keine durchgehende Unterkonstruktion, die vom Wagenteil in den Fahrzeugkopf reicht, zur Verfügung steht. Um die Aufgabe erfüllen zu können, sind die konstruktiven Merkmale des Wagenteils zu berücksichtigen.

Die Aufgabe wird erfindungsgemäß gelöst durch ein Crash-System für ein Kopfmodul nach Anspruch 1.

Im vorliegenden Fall stellt sich die Unteraufgabe, den erfindungsgemäßen Fahrzeugkopf an ein Wagenteil montieren zu können, das sich durch entsprechende Schnittstellenbauteile auszeichnet. Dies sind insbesondere:
- zwei Längsträger des Untergestells, die sich an den Unterkanten des Wagenteils in Längsrichtung erstrecken und deren Stirnflächen zur Montage des Fahrzeugkopfes geeignet sind,
- eine Untergestellstütze zur Fahrerkabine, die zwischen den beiden Längsträgern des Untergestells verläuft und in den Hauptquerträger mündet, der in dem Drehgestell des Wagenteils lagert. Der Hauptquerträger ist in den beiden Längsträgern des Untergestells widergelagert. Die Untergestellstütze zur Fahrerkabine und der Hauptquerträger sind vorzugsweise aus Stahl gefertigt.
- zwei Längsträger des Wagendaches, die sich an den Oberkanten des Wagenteils in Längsrichtung erstrecken und deren Stirnflächen zur Montage des Fahrzeugkopfes geeignet sind.

Die Längsträger sind vorzugsweise aus Faserverbundwerkstoff gefertigt. Alle Schnittstellenbauteile weisen entsprechende Befestigungsmöglichkeiten für die korrespondierenden Bauteile der Kabine auf. Bevorzugt sind dies lösbare Befestigungen, ganz besonders bevorzugt Schraubverbindungen.

Erfindungsgemäß wird die Aufgabe mit einem Crash-System nach Anspruch 1 gelöst. Vorteilhafte Ausgestaltungen sind in den rückbezogenen Unteransprüchen offenbart.

Das erfindungsgemäße Crash-System ist als ein unteres Crash-Durchleitungselement gestaltet, das mit einer Crash-Box ausgestattet ist und darüber hinaus die verbliebene Stoßenergie in die Untergestellstütze des nachfolgenden Wagenteils leitet. Das Crash-Durchleitungselement verläuft somit unterhalb des Kabinenbodens. Erfindungsgemäß ist an dem Crash-Durchleitungselement die Mittelpufferkupplung befestigt.

Vorteilhaft wird so die Kraftübertragung über die Mittelpufferkupplung im Normalbetrieb mit der Übertragung der verbliebenen Stoßenergie im Crash-Falle zusammengeführt. Dadurch werden vorteilhaft zwei getrennte oder teilweise getrennte Systeme vermieden. Dies vereinfacht vorteilhaft den Aufbau und erleichtert die Montage des Kopfteils am nachfolgenden Wagenteil. Die Mittelpufferkupplung ist teleskopierbar aufgebaut. Sie kann aus einer Ruhelage, in der sie hinter einer Klappe in der Frontseite des Kopfteils untergebracht ist, in eine Arbeitslage bewegt werden, in der das Ankoppeln weiterer Zugteile möglich ist. Die Mittelpufferkupplung weist darüber hinaus ein Energieverzehrelement nach dem Stand der Technik auf. Dieses Energieverzehrelement wandelt einen Teil der Stoßenergie im Crash-Falle in Verformungsarbeit um, wenn der Zusammenstoß erfolgt, während die Mittelpufferkupplung sich in Arbeitslage befindet.

Die Fahrerkabine ist vorzugsweise als zweischalige Konstruktion ausgebildet. Die äußere Schale ist mit den Systemen, die im Crash-Falle die Stoßenergie in Verformung umwandeln, verbunden. Die innere Schale kleidet den eigentlichen, von Passagieren nutzbaren, Innenraum aus. Beide Schalen sind als Faserverbundstrukturen ausgebildet, die keine wesentlichen Beiträge zur Crash-Resistenz liefern. Die äußere Schale gewährleistet die notwendige Steifigkeit der Konstruktion, indem sie als mehrlagige Faserverbundstruktur, optional mit zwischen den Faserschichten liegenden Kernen, realisiert ist. In den Faserschichten können gelegte, gewickelte oder geflochtene Fasergebilde eingesetzt werden. Zur Verbesserung der Steifigkeit sind auch UD-Faserstränge (unidirektionale Faserstränge) möglich. Vorteilhaft ist, dass die A-Säulen der äußeren Kabine keine speziellen Verstärkungen für die Kraftübertragung im Crash-Falle aufweisen. Bevorzugt sind die A-Säulen der äußeren Kabine zur Durchführung elektrischer Leitungen ausgestaltet. Die äußere Kabinenschale wird vorzugsweise aus Fasergelegen aufgebaut, die anschließend mit einem Matrixwerkstoff getränkt und konsolidiert werden. Auch der Aufbau aus bereits mit Matrixwerkstoff getränkten Fasergelegen ist möglich. Eine Verbindung der äußeren mit der inneren Schale erfolgt bevorzugt im Bereich der Front- und Seitenscheiben. Hier sind die beiden Schalen miteinander verschraubt, verklebt oder in sonstiger Weise verbunden. Die Frontscheibe ist vorzugsweise in der äußeren Schale eingeklebt. Vorzugsweise sind Sollbruchstellen vorgesehen, die gewährleisten, dass die Frontscheibe im Crash-Falle sich aus dem Rahmen löst und keine bzw. nur wenige Bruchstücke in den Innenraum gelangen. In einer weiteren bevorzugten Ausführungsform weist die Frontscheibe einen eigenen Rahmen auf, mit dem sie in der äußeren Schale befestigt ist. Auch hier sind Sollbruchstellen bevorzugt.

Das Kopfmodul weist eine flache Nase ("flat nose") auf. Kraftkomponenten in vertikaler Richtung, die ein Aufklettern verursachen, werden dadurch wirksam vermieden. Dieser Ansatz ist vorteilhaft da sich ausschließlich identische Zugeinheiten treffen können. Hinter dem Teil der flachen Nase, der in Bewegungsrichtung (und bei nicht teleskopierter Mittelpufferkupplung) am weitesten hervorragt, ist eine Crash-Box angeordnet. Diese Crash-Box ist entsprechend bekannten Ausführungsformen aus dem Stand der Technik aufgebaut. Bevorzugt weist die Crash-Box einen Metallschaum (vorzugsweise Aluminiumschaum) auf, der in einem Faserverbundgehäuse angeordnet ist. Im Crash-Falle wird dieser Metallschaum unter Energieverzehr zusammengedrückt.

Das untere Crash-Durchleitungselement ist derart gekrümmt, dass es im Bereich der inneren Schale unter dem Kabinenboden verläuft und erst im Schnittstellenbereich zur Untergestellstütze auf deren Niveau ansteigt, um die Montage zu ermöglichen. Diese erfolgt bevorzugt mit lösbaren metallischen Verbindungen, vorzugsweise Schraubverbindungen. In einer besonders bevorzugten Ausführungsform ist das Crash-Durchleitungselement zweifach abgewinkelt aufgebaut. Es verläuft von der Crash-Box, die unterhalb der Brüstung und oberhalb der Mittelpufferkupplung angeordnet ist, schräg nach unten bis unterhalb des Bodens der inneren Schale. Dort erfolgt eine Richtungsänderung in die Horizontale bis annähernd zum Ende des Bodens der inneren Schale. Hier steigt es schräg bis zur Verbindungsschnittstelle zur Untergestellstütze an. Die eingeschlossenen Winkel zwischen der Horizontalen und den abgewinkelten Teilen des Crash-Durchleitungselements liegen vorzugsweise im Bereich zwischen 15° und 75°, bevorzugt zwischen 30° und 60°. Das Crash-Durchleitungselement weist vorzugsweise einen nach unten geöffneten U-förmigen (bzw. rechtwinkligen, nach unten offenen) Querschnitt auf. Dies gewährleistet eine besonders hohe Steifigkeit auch im Crash-Fall. An dem unteren Crash-Durchleitungselement ist nach der ersten Krümmung (nach dem Teil, der von der Crash-Box zum horizontalen Teil des unteren Crash-Durchleitungselements führt) die Mittelpufferkupplung angeordnet. Die Halterung der Mittelpufferkupplung erfolgt vorzugsweise über ein metallisches Montageelement, das an den nach unten weisenden Schenkeln des U-förmigen Querschnitts, vorzugsweise mittels Bolzen- oder Schraubverbindung, befestigt ist. Dazu weist das Crash-Durchleitungselement entsprechende Montageöffnungen bzw. Schraubenlöcher auf. An dem Montageelement ist die Mittelpufferkupplung befestigt.

Optional weist das Crash-Durchleitungselement weitere Montageöffnungen bzw. Schraubenlöcher auf der Oberseite auf, mittels derer eine Verbindung zur inneren Kabinenschale hergestellt werden kann.

Erfindungsgemäß nimmt dieser Abstand zu oder ab. Auch die Länge der beiden Schenkel des U-förmigen Querschnittes über die Länge des Crash-Durchleitungselementes, in Bewegungsrichtung gesehen, kann variieren, insbesondere in den an- bzw. absteigenden Abschnitten geringer als im horizontalen Abschnitt sein.

Da das Crash-Durchleitungselement bevorzugt mittels computergestützter Entwurfs- und Simulationswerkzeuge gestaltet wird, ist die tatsächliche Ausgestaltung Ergebnis einer computergestützten Optimierung. Dabei werden auch der Schenkelabstand bzw. die Schenkellänge und deren Veränderung über die Bauteillänge festgelegt.

Das untere Crash-Durchleitungselement ist bevorzugt aus Faserverbundmaterial gefertigt. Dabei ist eine mehrlagige Anordnung von Verstärkungsfasern vorteilhaft. Hierbei ist mindestens eine unidirektionale Lage vorgesehen, die (in Hauptbelastungsrichtung) vom vorderen Ende des Crash-Durchleitungselementes (von der Crash-Box) bis zum hinteren Ende des Crash-Durchleitungselementes (dem Einleit- und Montagepunkt an der Untergestellstütze des nachfolgenden Wagenteils) führt. Optional sind mehrere unidirektionale Lagen vorgesehen, die sich sowohl im Bogen bzw. waagerechten Teil der Krümmung der U-Form als auch in den Schenkeln des U-förmigen Querschnitts erstrecken können. Vorteilhaft wechseln sich die unidirektionalen Lagen (UD-Lagen) mit Verstärkungsmateriallagen ab, die mehrachsig ausgerichtet sind. In einer besonders bevorzugten Ausführungsform sind die Lagen untereinander verbunden. Dazu kommen Verklammerungen, besonders bevorzugt jedoch Faserverbindungen als Vernähungen oder Verstickungen der Faserlagen zum Einsatz.

In einer weiteren bevorzugten Ausführungsform des Crash-Durchleitungselementes wird ein dreidimensional ausgeführtes Faserverstärkungsmaterial genutzt. Derartige dreidimensionale Faserverstärkungen können bspw. durch Flechten mit Spezialmaschinen der Firma Herzog hergestellt werden. Das dreidimensional ausgeführte Faserverstärkungsmaterial kann allein oder in Kombination mit weiteren Faserlagen eingesetzt werden. Besonders bevorzugt wird ein dreidimensional ausgeführtes Faserverstärkungsmaterial in Belastungsrichtung mit unidirektionalen Fasern durchschossen, die die Faserverstärkung in dieser Richtung weiter erhöhen.

In Kombination mit den oben genannten Lösungen können auch Wirrfaserlagen (bspw. filzartig) als Verstärkungsfasermaterial, insbesondere gemeinsam, vorzugsweise alternierend, mit UD-Faserlagen eingesetzt werden.

Alternative Ausführungsformen sehen im Bereich der Montageöffnungen, bzw. der Schraubenlöcher, verstärkende Einleger vor, die gemeinsam mit dem Faserverstärkungsmaterial im Matrixmaterial eingeschlossen sind. Hierbei kann es sich bspw. um Hülsen aus Edelstahl oder Titan handeln.

Bevorzugt ist unterhalb der Frontscheibe eine Brüstungsverstärkung der inneren Kabinenschale angeordnet. Unterhalb dieser Brüstungsverstärkung, bzw. wenn diese fehlt, unterhalb der Brüstung der Frontscheibe, und oberhalb der Mittelpufferkupplung ist in der äußeren Schale optional eine Platte aus faserverstärktem (vorzugsweise kohlefaserverstärktem) Kunststoff angeordnet. Diese reicht vorzugsweise über die gesamte Breite der Front der Kabine. Optional sind schmalere Ausführungen möglich. Im zentralen Teil der Platte ist diese an der Stelle verdickt, die vor der Crash-Box liegt. Die Platte bildet dann gemeinsam mit der Crash-Box und dem unteren Crash-Durchleitungselement ein Sicherheitssystem, das die hinter der Crash-Box noch auftretenden Kräfte in die Untergestellstütze des nachfolgenden Wagens ableitet. Im Kollisionsfall wird der verdickte Teil aus der Platte herausgebrochen (verzehrt dabei einen Teil der Energie) und die weitere Bewegung wird von der Crash-Box aufgenommen, die diese in Verformungsenergie umwandelt.

Als bevorzugte Materialien kommen für die Kabinenschalen und die Systeme für den Crash-Fall Faserverbundwerkstoffe zum Einsatz. Befestigungselemente etc. können vorteilhaft aus Metall gefertigt sein. Auch die Mittelpufferkupplung ist nach dem Stand der Technik aus Metall hergestellt. Bevorzugt handelt es sich bei den Faserverbundwerkstoffen um mit Kohlefasern, Glasfasern oder Basaltfasern verstärkte Harze, vorzugsweise Epoxidharze oder phenolische Harzsysteme.

Die Konstruktion der Kabine und die Auslegung des erfindungsgemäßen Crash-Systems erfolgen bevorzugt mit computergestützten Simulationsverfahren, die es gestatten, die Auslegung entsprechend den gültigen Vorschriften vorzunehmen. Die Simulationsverfahren und computergestützten Gestaltungswerkzeuge sind dem Fachmann bekannt.

Die folgenden Figuren erläutern eine bevorzugte Ausführungsform des erfindungsgemäß gestalteten Kopfmoduls für ein Schienenfahrzeug.

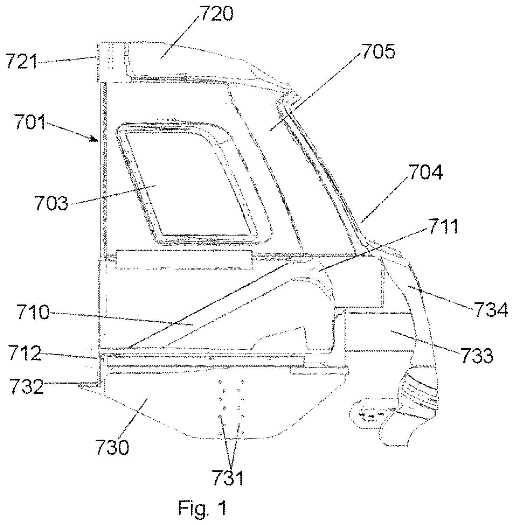

**Fig. 1** zeigt schematisch eine Seitenansicht der erfindungsgemäßen Kabine ohne die äußere Schale. Auch die Mittelpufferkupplung wurde aus Übersichtlichkeitsgründen weggelassen. Die innere Schale 701 ist zweiteilig ausgeführt. Die Teilung erfolgt in horizontaler Ebene oberhalb der Brüstungsverstärkung 711. Der obere Teil der inneren Schale 701 weist die Öffnung 704 für die Frontscheibe und die Seitenscheiben 703 auf. Die Fensteröffnungen sind durch die A-Säule 705 voneinander getrennt. Oberhalb des oberen Teils der inneren Schale ist der Ringanker 720 dargestellt. Dieser wird über die Befestigungsvorrichtung 721 lösbar an den oberen Längsträgern des nachfolgenden Wagenteils (nicht dargestellt) befestigt.

In den unteren Teil der inneren Schale sind die Brüstungsverstärkung 711 und die UD-Gurte 710 integriert, die die Kraft von der Brüstungsverstärkung 711 auf die Einleitpunkte 712 in die unteren Längsträger des nachfolgenden Wagenteils übertragen.

Unterhalb des unteren Teils der inneren Schale verläuft das untere Crash-Durchleitungselement 730. An der Frontseite der Kabine ist die Platte 734 dargestellt. Die Patte hat im Bereich der nachfolgenden Crash-Box eine Dicke von 4 cm. Im umgebenden Bereich ist sie noch ca. 2 cm dick. Die Platte ist aus carbonfaserverstärktem Kunststoff hergestellt. Dieser Platte nachgeordnet ist die Crash-Box 733. Im Crash-Falle erfolgt der Aufprall auf der Platte 734, die die Kraft an die Crash-Box 733 weitergibt und dort weitestgehend abbaut. Verbliebene Stoßenergie wird in das untere Crash-Durchleitungselement 730 weitergeleitet und dort am Befestigungspunkt 732 in die Untergestellstütze des nachfolgenden Wagenteils übergeben. Im horizontalen Teil des unteren Crash-Durchleitungselementes 730 sind die Öffnungen 731 zur Befestigung der Mittelpufferkupplung erkennbar.

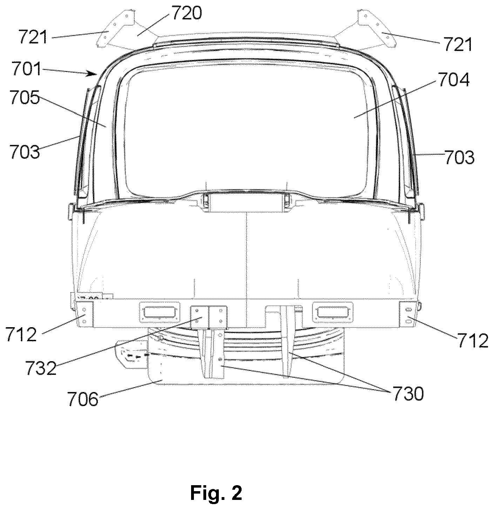

**Fig. 2** zeigt schematisch die Rückansicht der inneren Schale der Kabine. Es handelt sich um die Seite, mit der die Kabine am nachfolgenden Wagenteil montiert ist. Die Montage erfolgt bevorzugt an den beiden oberen Längsträgern des nachfolgenden Wagenteils mittels der Befestigungselemente 721 des oberen Ringanker, mittels der Befestigungselemente an den Einleitpunkten 712 der UD-Gurte von der Brüstungsverstärkung und mittels der Befestigungsvorrichtung 712 (nur eine dargestellt, eine zweite ist symmetrisch auf der rechten Seite angeordnet) des unteren Crash-Elements an der Untergestellstütze.

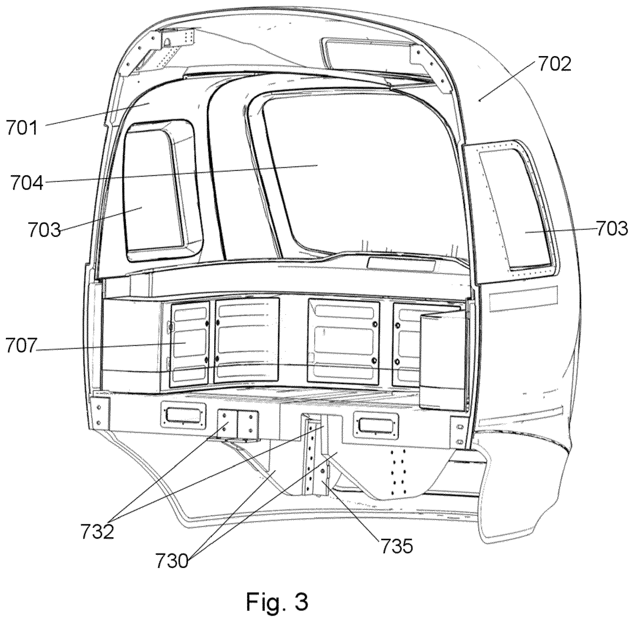

**Fig. 3** zeigt schematisch, wie die innere Schale 701 in die äußere Schale eingepasst ist und beispielhaft, wie die Inneneinbauten 707 angeordnet sein können.

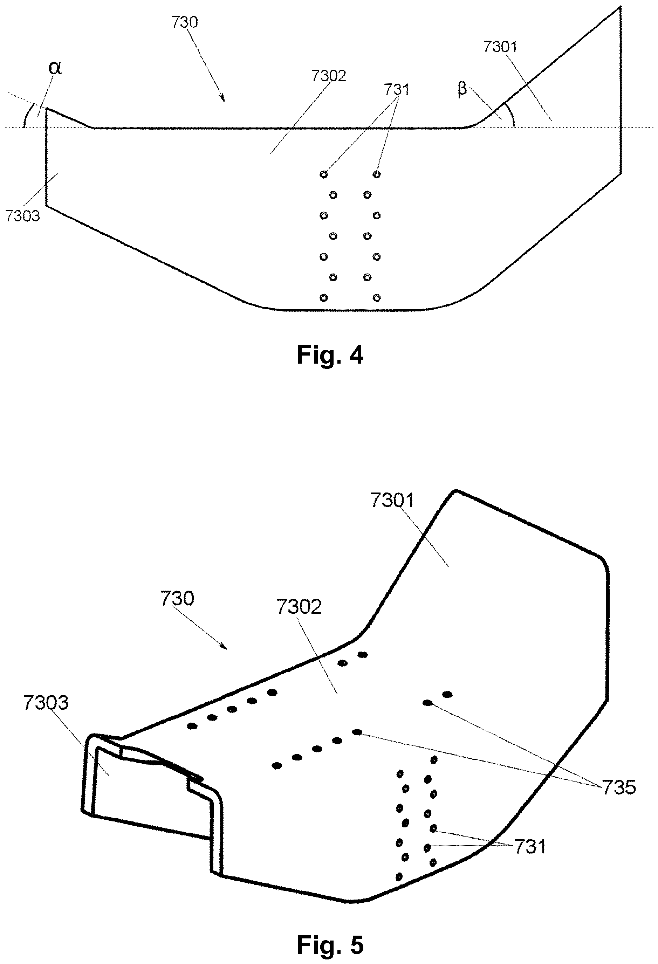

**Fig. 4** zeigt schematisch das Crash-Durchleitungselement 730 in einer seitlichen Ansicht. Das Crash-Durchleitungselement 730 weist einen absteigenden Bereich 7301 auf, in dem es von der Crash-Box (nicht dargestellt) zum horizontalen Teil 7302 verläuft. Mit dem ansteigenden Teil 7303 verläuft das Crash-Durchleitungselement vom horizontalen Teil zum Anbindungspunkt an die Mittelpufferkupplung (nicht dargestellt).

**Fig. 5** zeigt schematisch das Crash-Durchleitungselement 730 aus Fig. 4 in einer 3D-Ansicht.

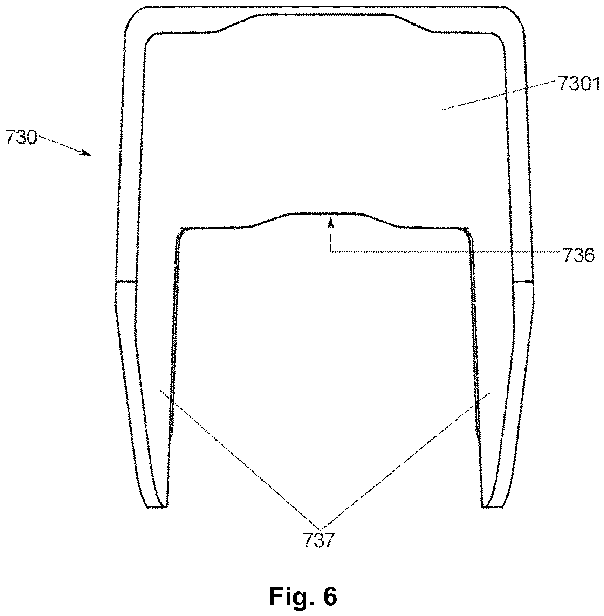

**Fig. 6** zeigt schematisch die Frontansicht des Crash-Durchleitungselementes 730. Zur Verdeutlichung ist der U-förmige Querschnitt des Crash-Durchleitungselementes 730 mit dem Krümmungsbereich 736 und den beiden Schenkeln 737 dargestellt.

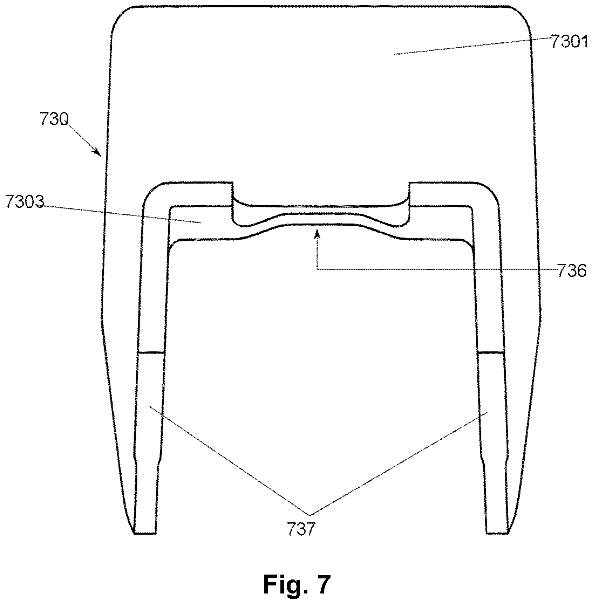

**Fig. 7** zeigt schematisch die Rückansicht des Crash-Durchleitungselementes 730. In dieser Darstellung ist besonders gut zu erkennen, dass das Crash-Durchleitungselement eine Form aufweist, bei der der Abstand der beiden Schenkel von der Crash-Box (nicht dargestellt) zur Rückseite des Crash-Durchleitungselementes 730 hin abnimmt.

### Bezugszeichenliste

- 701: innere Schale
- 702: äußere Schale
- 703: Seitenfensteröffnung
- 704: Frontfensteröffnung
- 705: A-Säule
- 706: Abdeckklappe der Mittelpufferkupplung
- 707: Inneneinbauten
- 730: unteres Crash-Durchleitungselement
- 7301: Abschnitt des Crash-Durchleitungselement von der Crash-Box zum horizontalen Teil
- 7302: horizontaler Teil
- 7303: Abschnitt des Crash-Durchleitungselement vom horizontalen Teil zum Befestigungselement an der Untergestellstütze
- 731: Bohrungen zur Befestigung der Mittelpufferkupplung
- 732: Befestigungsvorrichtung des unteren Crash-Elements an der Untergestellstütze
- 733: Crash-Box
- 734: Platte
- 735: Montageschiene für Mittelpufferkupplung
- 736: Krümmungsbereich des U-förmigen Querschnitts
- 737: Schenkel des U-förmigen Querschnitts
- α: Winkel des Abschnitts des Crash-Durchleitungselement vom horizontalen Teil zum Befestigungselement an der Untergestellstütze
- β: Winkel des Abschnitts des Crash-Durchleitungselement von der Crash-Box zum horizontalen Teil

## Patentansprüche

1. Crash-System für ein Kopfmodul eines Schienenfahrzeugs, wobei das Kopfmodul geeignet ist, ohne zusätzliches Untergestell an der Stirnfläche eines nachfolgenden Wagenteils lösbar befestigt zu werden, und wobei die Stirnfläche des Wagenteils die folgenden Montageschnittstellen aufweist:
- zwei Längsträger des Untergestells, die sich an den Unterkanten des Wagenteils in Längsrichtung erstrecken und deren Stirnflächen zur Montage des Kopfmoduls geeignet sind,
- eine Untergestellstütze, die zwischen den beiden Längsträgern des Untergestells verläuft und in einen Hauptquerträger mündet, der in einem Drehgestell des Wagenteils lagert, wobei die Stirnfläche der Untergestellstütze zur Montage des Kopfmoduls geeignet ist,
- zwei Längsträger eines Wagendaches, die sich an den Oberkanten des Wagenteils in Längsrichtung erstrecken und deren Stirnflächen zur Montage des Kopfmoduls geeignet sind,
und das Kopfmodul aus einer inneren und einer äußeren Schale aufgebaut ist und mindestens ein Crash-System, das im Crash-Falle geeignet ist, Bewegungsenergie in Verformung umzuwandeln, aufweist, wobei dieses Crash-System beinhaltet:
- eine Crash-Box (703), die unterhalb eines Frontfensters angeordnet werden kann und oberhalb einer Mittelpufferkupplung angeordnet ist,
- ein unteres Crash-Durchleitungselement (730), das die Crash-Box (703) an seinem vorderen Ende trägt und mit seinem hinteren Ende an der Untergestellstütze des nachfolgenden Wagenteils befestigt werden kann und im Crash-Falle auftretende Kräfte in das Untergestell des nachfolgenden Wagenteils überträgt,
- die Mittelpufferkupplung, die an dem Crash-Durchleitungselement (730) derart angeordnet ist, dass die Zug- oder Druckkräfte des Normalbetriebs von der Mittelpufferkupplung über das Crash-Durchleitungselement in das Untergestell des nachfolgenden Wagenteils übertragen werden,
**dadurch gekennzeichnet, dass**
das untere Crash-Durchleitungselement (730) einen nach unten geöffneten U-förmigen Querschnitt aufweist, wobei der Abstand der Schenkel des U-förmigen Querschnitt des unteren Crash-Durchleitungselements (730) über die Länge des Crash-Durchleitungselements (730) zu- oder abnimmt.

2. Crash-System nach Anspruch 1, **dadurch gekennzeichnet, dass** das untere Crash-Durchleitungselement (730) von der Crash-Box (733) absteigend in Richtung eines unterhalb eines Kabinenbodens verlaufenden horizontalen Teil (7301) und hinter dem horizontalen Teil aufsteigend zu der Befestigungsvorrichtung (732) des unteren Crash-Elements an der Untergestellstütze verläuft.

3. Crash-System nach Anspruch 1, **dadurch gekennzeichnet, dass** die Länge der beiden Schenkel (737) des U-förmigen Querschnittes über die Länge des Crash-Durchleitungselementes (730), in Bewegungsrichtung gesehen, variiert.

4. Crash-System nach Anspruch 3, **dadurch gekennzeichnet, dass** die Länge der beiden Schenkel (737) des U-förmigen Querschnittes in den an- bzw. absteigenden Abschnitten geringer als im horizontalen Abschnitt ist.

5. Crash-System nach einem der vorhergehenden Ansprüche, **dadurch gekennzeichnet, dass** das untere Crash-Durchleitungselement (730) aus Faserverbundwerkstoff, insbesondere Kohlefaserverbundwerkstoff, hergestellt ist.

6. Crash-System nach Anspruch 5, **dadurch gekennzeichnet, dass** das untere Crash-Durchleitungselement (730) aus mehreren Faserlagern mit Fasern unterschiedlicher Orientierung aufgebaut ist.

7. Crash-System nach Anspruch 6, **dadurch gekennzeichnet, dass** mindestens eine Faserlage UD-Fasern aufweist, die sich über die gesamte Länge des Crash-Durchleitungselementes (730) erstrecken.

8. Crash-System nach einem der Ansprüche 5 bis 7, **dadurch gekennzeichnet, dass** unterschiedliche Faserlagern untereinander verklammert, vernäht oder zusammengestickt sind.

9. Crash-System nach einem der vorhergehenden Ansprüche, **dadurch gekennzeichnet, dass** in Bewegungsrichtung des Kopfmoduls vor der Crash-Box (733) des unteren Crash-Durchleitungselements (730) eine Platte (734) aus Kohlefaser-Verbundwerkstoff angeordnet ist, die im Crash-Fall einen Teil der Stoßenergie aufnimmt.

10. Crash-System nach Anspruch 9, **dadurch gekennzeichnet, dass** die Platte (734) in dem Teil, der mit der Crash-Box (733) in Verbindung steht, verdickt ausgeführt ist.

## Claims

1. A crash system for a head module of a rail vehicle, wherein the head module is suitable to be detachably fixed to the end face of a following coach section without an additional underframe, and wherein the end face of the coach section has the following installation interfaces:
- two longitudinal beams of the underframe, which extend in the longitudinal direction on the lower edges of the coach section and the end faces of which are suitable for the installation of the head module,
- an underframe support, which runs between the two longitudinal beams of the underframe and opens into a main cross beam which is mounted in a bogie of the coach section, wherein the end face of the underframe support is suitable for the installation of the head module,
- two longitudinal beams of a coach roof, which extend in the longitudinal direction on the upper edges of the coach section and the end faces of which are suitable for the installation of the head module,
and the head module is constructed from an inner and an outer shell and has at least one crash system which is suitable for converting kinetic energy into deformation in the event of a crash, wherein this crash system includes:
- a crash box (703) which can be arranged underneath a front window and is arranged above a central buffer coupling,
- a lower crash conduction element (730) which carries the crash box (703) at its front end and with its rear end can be fixed to the underframe support of the following coach section and transmits forces arising in the event of a crash into the underframe of the following coach section,
- the central buffer coupling which is arranged on the crash conduction element (730) such that the tensile or compressive forces of normal operation are transmitted from the central buffer coupling via the crash conduction element into the underframe of the following coach section,
**characterized in that**
the lower crash conduction element (730) has a U-shaped cross section open towards the bottom, wherein the distance between the arms of the U-shaped cross section of the lower crash conduction element (730) increases or decreases over the length of the crash conduction element (730).

2. The crash system according to claim 1, **characterized in that** the lower crash conduction element (730) runs from the crash box (733) in a downward sloping manner in the direction of a horizontal section (7301) running underneath a cab base and after the horizontal section in an upward sloping manner to the fixing device (732) of the lower crash element on the underframe support.

3. The crash system according to claim 1, **characterized in that** the length of the two arms (737) of the U-shaped cross section varies over the length of the crash conduction element (730), seen in the direction of movement.

4. The crash system according to claim 3, **characterized in that** the length of the two arms (737) of the U-shaped cross section is shorter in the upward and downward sloping sections than in the horizontal section.

5. The crash system according to one of the preceding claims, **characterized in that** the lower crash conduction element (730) is made from fibre composite material, in particular carbon fibre composite material.

6. The crash system according to claim 5, **characterized in that** the lower crash conduction element (730) is composed of several fibre plies with fibres of varying orientation.

7. The crash system according to claim 6, **characterized in that** at least one fibre ply has UD fibres which extend over the entire length of the crash conduction element (730).

8. The crash system according to one of claims 5 to 7, **characterized in that** different fibre plies are interlocked, sewn or stitched together.

9. The crash system according to one of the preceding claims, **characterized in that** in front of the crash box (733) of the lower crash conduction element (730) in the direction of movement of the head module, a plate (734) made of carbon fibre composite material is arranged which absorbs a portion of the impact energy in the event of a crash.

10. The crash system according to claim 9, **characterized in that** the plate (734) is designed thickened in the part which is connected to the crash box (733).

## Revendications

1. Système de collision pour un module de tête d'un véhicule sur rails, le module de tête étant apte à être fixé de manière détachable sur la face frontale d'une partie de voiture suivante, sans bâti inférieur supplémentaire, et la face frontale de la partie de voiture présentant les interfaces de montage suivantes :
- deux longerons du bâti inférieur qui s'étendent dans le sens longitudinal au niveau des bords inférieurs de la partie de voiture et dont les faces frontales sont adaptées au montage du module de tête,
- un support de bâti inférieur qui s'étend entre les deux longerons du bâti inférieur et débouche dans une traverse principale qui est supportée dans un bogie de la partie de voiture, la face frontale du support de bâti inférieur étant adaptée au montage du module de tête,
- deux longerons d'un toit de voiture qui s'étendent dans le sens longitudinal au niveau des bords supérieurs de la partie de voiture et dont les faces frontales sont adaptées au montage du module de tête,
et le module de tête est construit à partir d'une coque intérieure et d'une coque extérieure et présente au moins un système de collision qui, en cas de collision, est apte à convertir de l'énergie cinétique en déformation, ce système de collision comprenant :
- une boîte de collision (703) qui peut être agencée au-dessous d'une fenêtre avant et est agencée au-dessus d'un accouplement de tampon central,
- un élément de passage de collision inférieur (730) qui supporte la boîte de collision (703) à son extrémité avant et est fixé par son extrémité arrière au support de bâti inférieur de la partie de voiture suivante et transmet les forces survenant en cas de collision dans le bâti inférieur de la partie de voiture suivante,
- l'accouplement de tampon central qui est agencé sur l'élément de passage de collision (730) de telle sorte que les forces de traction ou de compression du fonctionnement normal sont transmises de l'accouplement de tampon central, via l'élément de passage de collision, dans le bâti inférieur de la partie de voiture suivante,
**caractérisé en ce que**
l'élément de passage de collision inférieur (730) présente une section transversale en forme de U ouverte vers le bas, l'espacement des branches de la section transversale en forme de U de l'élément de passage de collision inférieur (730) augmentant ou diminuant sur la longueur de l'élément de passage de collision (730).

2. Système de collision selon la revendication 1, **caractérisé en ce que** l'élément de passage de collision inférieur (730) s'étend en descendant de la boîte de collision (733) en direction d'une partie horizontale (7301) s'étendant au-dessous d'un plancher de cabine, et derrière la partie horizontale en montant vers le dispositif de fixation (732) de l'élément de collision inférieur sur le support de bâti inférieur.

3. Système de collision selon la revendication 1, **caractérisé en ce que** la longueur des deux branches (737) de la section transversale en forme de U varie sur la longueur de l'élément de passage de collision (730), vu dans le sens du mouvement.

4. Système de collision selon la revendication 3, **caractérisé en ce que** la longueur des deux branches (737) de la section transversale en forme de U dans les tronçons ascendant et descendant est inférieure à celle dans le tronçon horizontal.

5. Système de collision selon l'une des revendications précédentes, **caractérisé en ce que** l'élément de passage de collision inférieur (730) est réalisé en matériau composite de fibres, notamment en matériau composite de fibres de carbone.

6. Système de collision selon la revendication 5, **caractérisé en ce que** l'élément de passage de collision inférieur (730) est construit à partir d'une pluralité de couches de fibres avec des fibres d'orientation différente.

7. Système de collision selon la revendication 6, **caractérisé en ce qu'**au moins une couche de fibres comprend des fibres UD s'étendant sur toute la longueur de l'élément de passage de collision (730).

8. Système de collision selon l'une des revendications 5 à 7, **caractérisé en ce que** différentes couches de fibres sont agrafées, cousues ou brodées ensemble.

9. Système de collision selon l'une des revendications précédentes, **caractérisé en ce qu'**une plaque (734) en matériau composite de fibres de carbone est agencée devant la boîte de collision (733) de l'élément de passage de collision inférieur (730) dans le sens de mouvement du module de tête et absorbe une partie de l'énergie d'impact en cas de collision.

10. Système de collision selon la revendication 9, **caractérisé en ce que** la plaque (734) est réalisée plus épaisse dans la partie qui communique avec la boîte de collision (733).
